# EUROPEAN PATENT SPECIFICATION

(11) **EP 0 549 765 B1**
(45) Date of publication and mention of the grant of the patent: **02.12.1998**
(21) Application number: 92915451.6
(22) Date of filing: 15.07.1992
(51) Int. Cl.: G06K 19/06

(54) **A METHOD OF REPRESENTING BINARY DATA**
Verfahren zur Darstellung von binären Daten
METHODE DE REPRESENTATION DE DONNEES BINAIRES

(30) Priority: 19.07.1991 US 733171
(43) Date of publication of application: 07.07.1993
(73) Proprietor: RENTSCH, Frederic, CH-8001 Zürich (CH)
(72) Inventor: RENTSCH, Frederic, CH-8001 Zürich (CH)
(74) Representative: Frei, Alexandra Sarah
(86) International application number: EP9201603
(87) International publication number: WO9302429

(56) References cited:
- WO-A-86/05906
- GB-A- 2 090 446
- GB-A- 2 218 240
- US-A- 4 924 078

## Description

### Field of the Invention

This invention relates to a method for representing binary data in a graphic array so that it can be recorded in a tangible form such as being printed by means of standard commercial printing processes. Such printed data can then be reconstituted to its original binary form by means of an image scanner and a computer program that extracts the binary data from the scanned image.

### Background of the Invention

### OCR

Optical Character Recognition (OCR) technology is widely used for regenerating text data from printed texts. OCR is essentially a software technology that handles the conversion of image data to binary text data.

The reliability of OCR is not perfect, but improvements are still being made. OCR, despite its imperfections, is very usable as a data acquisition tool in electronic text editing. It does not follow, however, that OCR is a technology that is well suited to be a communication vehicle between machines. There are three arguments against it: First, the graphic appearance of alphabetic letters (or numbers) responds to the requirements of human readers. Reading them with a machine commits far more processing resources to the task of character recognition than would have to be mobilized for the recognition of graphic symbols purposely designed for machine readability. The extra effort can only be justified in terms of adding value to primarily human-readable text systems. Second, the data density per area of printed matter in the case of human-readable text falls far short of the limits of the involved technologies. Third, each binary code (0 to 255) cannot be represented by a character. Only about one third of the 256 binary codes are unequivocally assigned to characters. Others are assigned to characters in a non-standard way and some codes have no character assignments. Spelling out numbers, each one with two hexadecimal digits, would solve the problem but at the expense of further deteriorating the achievable data density.

### Bar Codes

Several bar code formats are in wide use today, mainly for product identification. Bar codes encode information in one direction only, generally along a line. The perpendicular direction encodes no information, but carries redundancy, extending the horizontal data pattern over a comparatively large area, so that the pattern retains its functionality even with a certain degree of degradation and so that the bar code requires little mechanical coordination in aligning the reading machine with the pattern.

Bar codes store little information. They are well-suited for storing machine-readable identification codes, but for the transmission of bulk data, bar codes require far too much printed area per data unit to be of practical use. They typically occupy many times the area regular text would. By shortening the redundancy dimension of a bar code pattern, its data density could be proportionally increased. But the required accuracy of reader alignment would become more stringent in equal proportion.

In exceptional circumstances, very small amounts of data proper need to be conveyed. Bar codes are then appropriate to convey such data. An example would be timing information some TV program guides publish in the form of bar codes.

Programming Video recorder to record a specific program becomes a simple matter of pulling a bar code reader pen across the pattern for the desired program. It is also possible to modify software in a digital data processing system by reading a bar code as described in the patent application GB-2'090'446. Said document refers to parallel bands of information. Each band is introduced by synchronization marks, allowing to identify the position of the information band. The bits of information are enclosed within pre-data and post-data synchronization bursts.

### Dot Codes

Dot code systems use both dimensions of a flat surface to record information. Dot codes are inherently hard to read. They require precise synchronization of the reading apparatus with the data pattern. Namely, the data read is a reconstructed sequence of the original data only if the reader is accurately aligned with the rows of data dots as proposed in the patent application WO-86/05'906. Another possibility consists in obtaining a synchronization by measuring intersections of corners of each dot code matrix or field as proposed in the patent application GB-2'218'240, and in the patent US-4'924'078. The latter refers to a rectangular border as a timing or sample separation reference for data to be read. This requirement is all the more exacting in the light of the high data densities dot systems attempt to achieve and the correspondingly fine dot screens they would employ.

If a reading machine is not synchronized or aligned with the data pattern, sequentiality is lost and would have to be reconstructed. Some kind of reference information would have to be introduced as a synchronization aid, as such information is essentially impossible to extract from the dot pattern itself (autocorrelation).

Dot code systems of the first kind (synchronized reader) have been proposed. They focus on reader synchronization, their major technological component. Such systems have not been successful in the marketplace. They necessitate dedicated high-precision machinery whose cost might well offset the benefits of their use.

### Summary of the Invention

Accordingly, an object of the present invention is to provide a method of representing binary data in a machine-readable graphic form. Data so represented is able to carry relatively large amounts of data per unit area, to be reproduced by traditional photomechanical means and to be reconverted to their original binary form using low-cost image scanners. The method furthermore offers great flexibility in arranging a data rectangle in terms of scale and aspect ratio.

Briefly described, the invention centers on the idea that a judicious design of dot code patterns combined with an appropriate encoding and decoding software will endow available machinery with new capabilities in such a way that a novel method of data transmission can be cost-effective, which it manifestly cannot as long as its realization requires dedicated hardware.

The present invention is defined by the claims.

The essence of the invention is a machine-readable graphic reference pattern that can be located with great precision by the reconstituting program. From this reference pattern the program is able to calculate the exact position of the graphic elements that contain the data proper. Thus the reference pattern and the data proper constitute a systematic unit which in the proposed form has the additional advantage of permitting combining such units in scalable rectangular arrangements of selectable aspect ratios.

### Brief Description of the Drawings

In order to impart full understanding of the manner in which these and other objects are attained in accordance with the invention, a particularly advantageous embodiment thereof will be described with reference to the accompanying drawings, which form a part of this disclosure, and wherein:
Fig. 1 is a view of a data array in accordance with the present invention;
Fig. 2 is an enlarged view of the array of Fig. 1;
Fig. 3 is a further enlarged view of the array of Figs. 1 and 2 with the data points further enlarged relative to the surrounding frames;
Fig. 4 is a view of a data array with null-data fields;
Fig. 5 is a fragmentary view of a corner of the array of Fig. 4;
Fig. 6 is a view similar to Fig. 5 of a further embodiment using a different form of synchronization lines;
Fig. 7 is a greatly enlarged partial view of a data field in which data dot locations are arranged on a triangular basis;
Fig. 8 is a greatly enlarged view similar to Fig. 7 in which the data dot locations are arranged orthogonally;
Fig. 9 is a partial view of a data array in accordance with the invention using an arrangement of data dot locations in accordance with Fig. 8;
Figs. 10 and 11 are flow diagrams illustrating steps in the processing of the present invention;
Figs. 12 and 13 are greatly enlarged outline illustrations of synchronization line patterns usable in the invention;
Fig. 14 is a view of a data array having a further embodiment of an information-containing frame, the frame width being exaggerated with respect to the data fields for purposes of illustration; and
Figs. 15, 16 and 17 are enlarged illustrations of data patterns usable in the frame of Fig. 14.

### Description of the Preferred Embodiments

Although the present invention has utility is several possible areas, it will be described in the context of conveying data in the form of printed matter. In the past, if a publisher of a magazine wished to supply its readers with computer programs or quantities of data, it had the option of providing the data or program as a human-readable printed list, or supplying the code on a diskette which had inherent problems of packaging and shipping because of the difference in nature between the magazine and the diskette. In the human readable form, the reader/customer was required to key the code into his machine in order to make use of it, an overwhelming task with large amounts of data or long programs. Printing the data in the magazine in a machine readable form is a much superior solution to this problem because the printed medium is consistent with the nature of the magazine and is producible in the same way as the remainder of the magazine. Efforts to implement this general concept in the recent past have, however, not been entirely successful.

For the purpose of machine-reading data patterns, the use of image scanners is contemplated. Image scanners are rapidly gaining popularity as components of desktop publishing systems and are used as the input components of both picture material and text for OCR systems. They are today marketed in the high-volume segment of non-professional computer users. Their prices are accordingly low and coming down.

Image scanners capture graphic data in the form of bit maps. They are, by themselves, ill-suited for extracting data from dot patterns because they have no means at all to ensure alignment between the mechanical components of the scanner and a dot pattern. The invention, consequently, relieves the scanner of the task of extracting the original data from the pattern and instead accepts from the scanner an image bit map, like the bit map of any other scanned graphic material. Next, the data is extracted from the bit map by a computer program. In order for that program to perform satisfactorily, the configuration of the data dot pattern is crucial. The invention specifies the essential characteristics of that configuration as follows:

### 1. Identification of a Data Pattern

The dot pattern must be identified as such and distinguished from extraneous print. A characteristic graphic element serves to distinguish the area of the dot field from any other form of printed material. Preferably, a frame-like border is formed so that it is unequivocally recognizable as confining a valid dot pattern by virtue of specific marks it contains, marks that can be used to perform other functions as well.

### 2. Spatial orientation of data pattern

The orientation of the data area is recognizable by specific markings that may be placed in the frame or within the frame and that may perform other functions as well. By "orientation" is meant "top", "bottom", "left" and "right". It is necessary to detect the orientation of the data area, else the tail end of the data stream could be confused with its beginning.

### 3. Scanner calibration

Reading binary data is more error-critical a process than capturing picture data. Calibration errors that are tolerable for picture scanning may defeat the extraction of binary data. Accordingly, they should be detected and either fed back into the machine for corrective action or reported as the cause of failure. Black and white reference areas of equal size should generate equal amounts of white and black readings and can be used for brightness calibration as will be described.

### 4. Geometric reference marks

The size of a data pattern should be restricted only by the available print area, not by the relative dot size. Since the decoding program must calculate the position of each dot with respect to some reference geometry, the maximum admissible distance any dot may be from a reference geometry is limited by the error margin of the decoding system and the radius of the dot. In dimensioning the dot's radius, allowance must be made for the expected absolute error margin. Since the absolute error margin of the calculation of a dot's position is proportional to the dot's distance from its reference geometry, that reference geometry must be close enough in terms of dot size to ensure the coincidence of a calculated dot position with some spot within the perimeter of the actual dot.

Covering pages with data print results in a ratio of dot size to data field size considerably smaller than the expected relative error margin. It follows that a large field of data print needs to be divided into smaller sectors, each having position-reference points close enough for the expected absolute error margin not to exceed the radius of the data dots, with a margin for scanner resolution and an appropriate margin of safety.

The invention envisages a grid of synchronization lines that can be detected and their position computed statistically with a precision that exceeds the resolution of the scanner. Such lines constitute the reference geometry in relation to which the associated dot pattern is geometrically exactly defined.

In order for the statistical location computation to perform best (linear regression in the case of straight lines), the edges of the synchronization lines follow a non-linear path such as a zig-zag pattern. The purpose of this design is to randomize the location of the line edge along its path with respect to the orthogonal grid of scanning points. In other words, a scanner reading anywhere within the zig-zag boundaries of the line on either side will register the proximity of the line with a statistical accuracy that is higher than the unit of resolution of the scan: the probability of hitting the synchronization line in that zone anywhere along the line grows linearly from 0% at the lateral distance of the zig-zag peaks from the line axis, to 100% at the lateral distance of the zig-zag valleys from the line axis. It follows that the amplitude of the zig-zag, the width of the probability strip, should be at least one resolution unit of the scan, if that probability strip is to catch at least one reading point per intersecting scan line and per intersecting scan row. Half a resolution unit may suffice for an amplitude, if the separation of the two edges (the two probability strips) is an integer and a half times the resolution unit. Each intersecting scan will then be guaranteed to read at least once either within one or the other of the two probability strips. In this context, a "resolution unit" is determined by the scanning machine used, nominally 300 dpi.

The phase, or length of one zig-zag, is best chosen to extend over several resolution units, so as to make the zig-zag shallow. The periodicity of the zig-zag should best be numerically uncoupled from the periodicity of the scans, so as to have no common integer divisors.

The zig-zagging of a synchronization line's borders serves to statistically soften its outlines and to yield more accurate regressions. The benefit of the artifact diminishes as the scanning resolution increases and becomes both unfeasible and unnecessary by the time the scan resolution attains the resolution of the print.

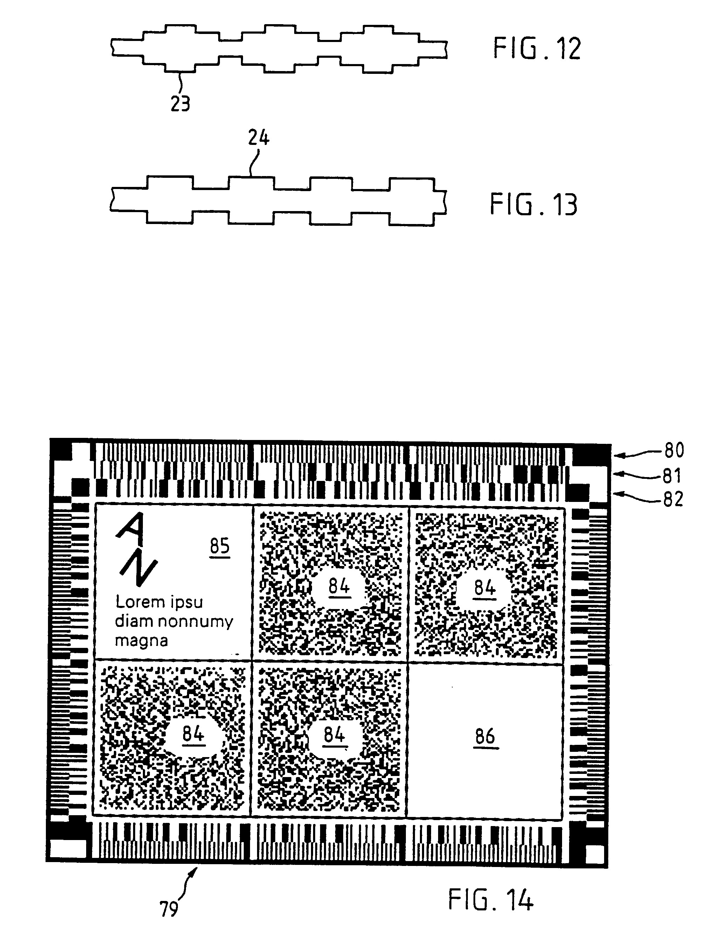

Laser printers, unlike commercial lithography tools, lack the resolution to produce zig-zagged synchronization lines as described at the level of resolution required for commercially feasible implementation of the invention. A stair-step design 23 such as shown in outline in Fig. 12 or a castellated or cog-rail design 24 such as shown in outline in Fig. 13 is a suitable compromise for laser printers.

Finally, smooth-edged synchronization lines may also perform satisfactorily. Whether used in conjunction with an orthogonal, triangular or other arrangement of the data dots, synchronization lines of any border design have the capacity to function as a geometry in reference to which individual data dots can be positively located. The essence of such synchronization lines lies in their role as a functional intermediary between the data contained in the pattern and the process that interprets the data.

### 5. Data dot screens

The screen arrangements of greatest interest are triangular and orthogonal dot screens (honeycomb and checkerboard, respectively). Triangular arrangements pack densest and can be generated by commercial lithography. Presently available, low-cost laser printers manufactured for office use cannot place dots on a triangular grid at the resolution scales under consideration but can generate suitable orthogonal patterns.

The nature of the described arrangements is determined not so much by the shape of the dots (in the dimensions under consideration, data dots will be essentially circular) but by the grid of the screen or array that defines the placement of the dots. A triangular arrangement places the dots on a sixty-degree grid, an orthogonal arrangement on a ninety-degree grid.

The enumeration of the above five basic elements or procedures follows more practical imperatives than systematic or logical ones. Functions, which in this disclosure appear associated with a particular element, may in practice be distributed to two or more elements. Conversely, dual or multiple functions may be handled in combination by one single element.

Some advantages of the present invention over current technologies can be summarized as follows. As compared with OCR, the method of the invention provides greater data density, 20 times greater or more. All binary codes 0 to 255 can be transmitted, not only the subset with character assignments. Computer programs or formatted data require all 256 codes. The transmission of the codes is not symbolic but numeric, hence unequivocal. (The assignment of characters to binary codes follows various standards). The present invention also provides for error-resistance. OCR systems don't provide for error checking and error correction. A strictly numerical system lends itself well to the incorporation of error-correction procedures.

As compared with bar codes, the invention provides vastly greater data density, easily 100 times greater.

Compared with other dot code systems, the proposed pattern technique permits large-area coverage of fine data screens, resulting in a transmission capacity of 200 Kilobytes or more per 8.5 x 11" page, using error correction and data compression. The actual density achievable depends largely on the type of data.

The system requires no special skills on the part of the user. It uses readily available hardware rather than dedicated and expensive precision tools. Added value is created.

Further advantages are that the resolution (screen size) is variable, the aspect ratio of data fields is selectable, and new benefits can be derived from existing infrastructures.

The invention does not involve unique combinations of hardware. A system capable of "reading" and interpreting data in accordance with the invention typically includes a scanner capable of viewing a printed data array or arrays and producing a bit map thereof at a resolution of at least 300 DPI and a computer, such as a conventional personal computer connected to receive and store in memory the bit map produced by the scanner. The computer should be able to accept and employ software for analyzing the bit map and should include a conventional monitor so that the software can be operated in a normal manner and so that commands and messages can be seen. None of these requirements are such that an ordinary computer readily available on the market would not suffice.

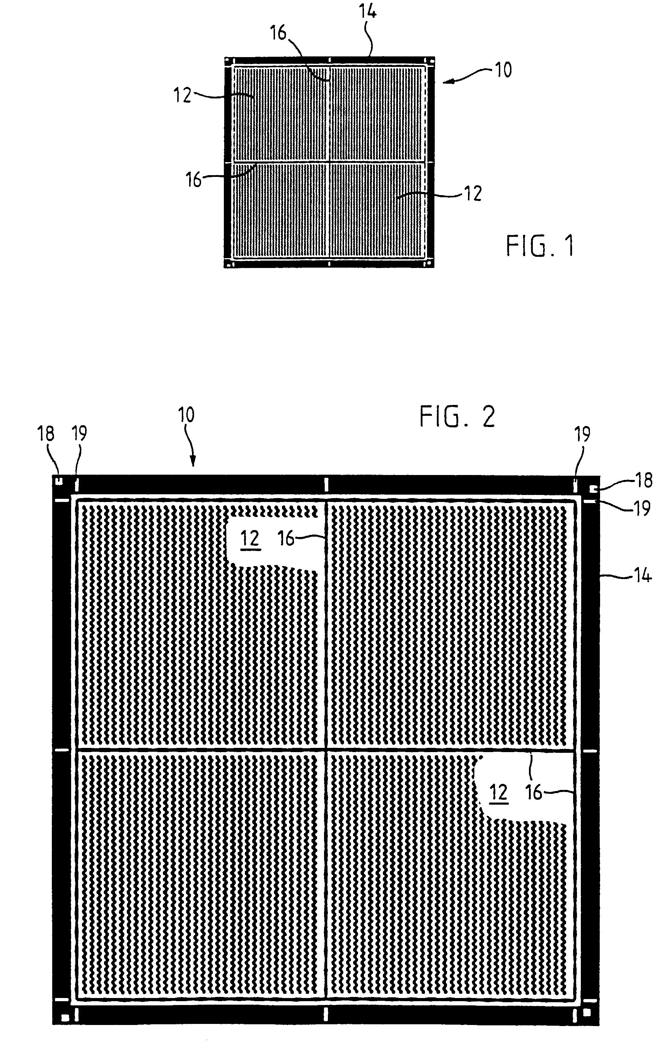

The following example of a configuration in accordance with the invention will demonstrate the principles discussed above. As seen in Fig. 1, a data field array of the invention indicated generally at 10 includes one or more dot code fields 12 of arbitrary dimension. The data field array can include any number of fields arranged in various ways so as to have various aspect ratios. Three elements are discernable:
1. An enclosing frame 14 that delimits the data within from any extraneous print outside of the frame. The data can thus appear on a page with other printed matter without giving rise to confusion about the location of the data;
2. An orthogonal network of synchronization lines 16; and
3. Four fields 12 of data dot screens.

Although the size and aspect ratio of the field array of the invention is not critical, it is important in any binary presentation system to be able to use the available space efficiently. The array shown in Fig. 1, which is approximately true scale, represents 592 bytes of data in each field 12, using an arrangement of 64x74 bits. Thus, a square of about 3 cm on a side holds about 2368 bytes.

Figure 2 is an enlarged view of the array of Figure 1. In this figure are more clearly seen several white marks 18, 19 within the boundaries of the frame line 14 which provide information on the structural organization of the layout: orientation, scale, aspect ratio, and approximate location of the synchronization elements. In particular, the substantially square areas 18 near the corners of the frame occupy unique positions relative to the corners of the frame, thereby uniquely identifying those corners which constitute the "top" of the array, i.e., that edge which is parallel with the beginning of the data. Areas 19 are substantially aligned with the synchronization lines 16, indicating to the reading system where to start looking for those lines. The number of marks 19 along the top edge and of marks 19 along a side edge define the aspect ratio of the array.

The striped appearance of the data patterns in the drawings is due to the artificial nature of the represented data. For reasons of programming convenience in generating the pattern, the data was assumed to consist of bits indefinitely alternating between "set" and "clear". Real data would typically look more like random dot patterns.

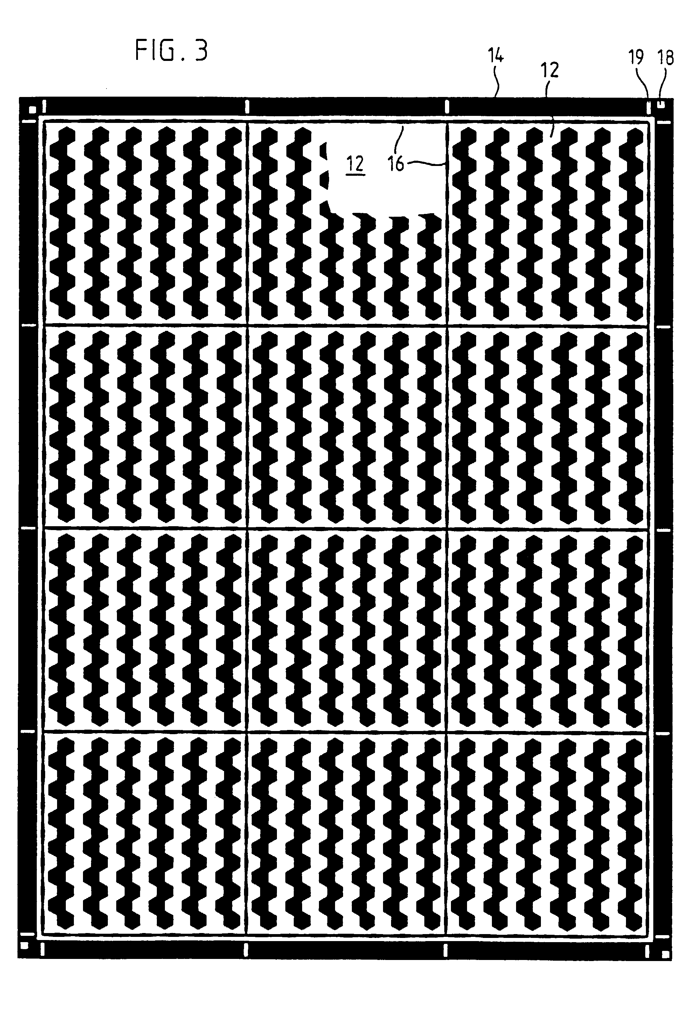

Fig. 3 is a still further enlargement of an array using the principles of Figs. 1 and 2, but in Fig. 3 the data dots have deliberately been made too large in relation to the organizational elements of the pattern, in order to render the screen geometry visible. It will be apparent that the dots are placed on a triangular grid. Dots centered on the intersections of a triangular grid take on a hexagonal appearance, an idealization without functional significance.

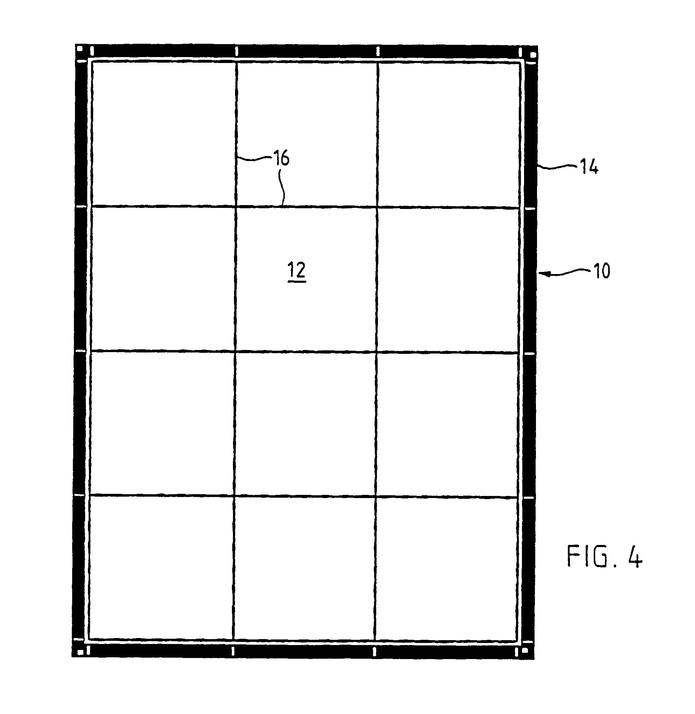

Fig. 4 shows a pattern of "null data". Only the organizational elements remain visible.

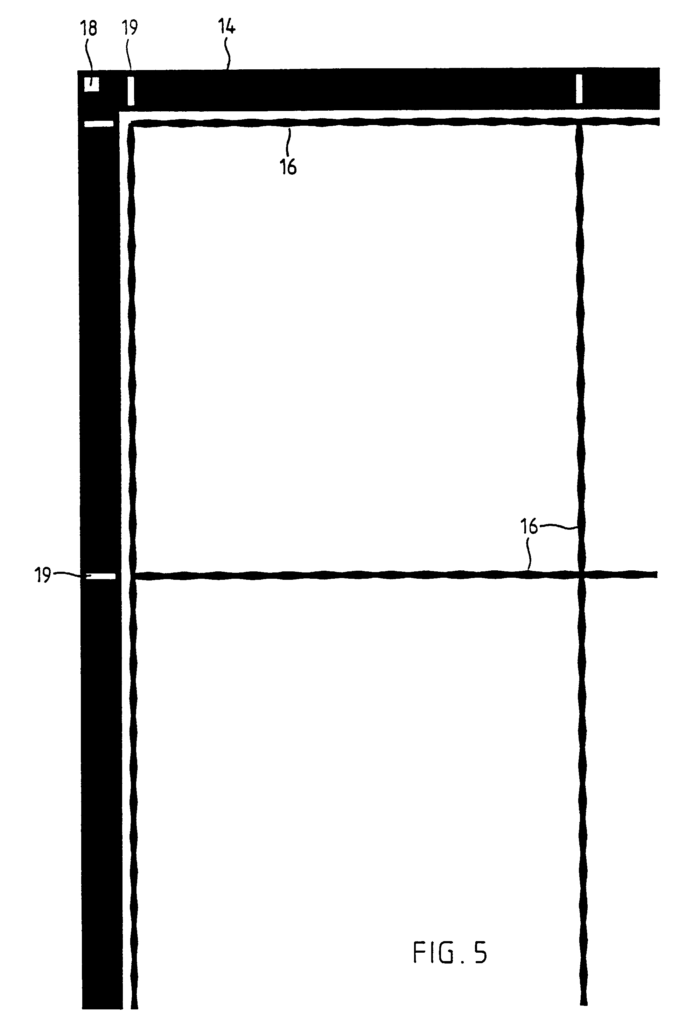

Figure 5 is an enlarged view of a portion of Fig. 4. The zig-zag in the outlines of the synchronization lines becomes evident. The phases of the zig-zag on both sides need not be mutually aligned in any particular way. A mutual half-phase shift, as shown, has the appearance of a "tapeworm". No phase shift results in a "snakelike" aspect.

Once more, only organizational elements are visible in Fig. 5, because all data elements have been defined to be white dots for purposes of illustration.

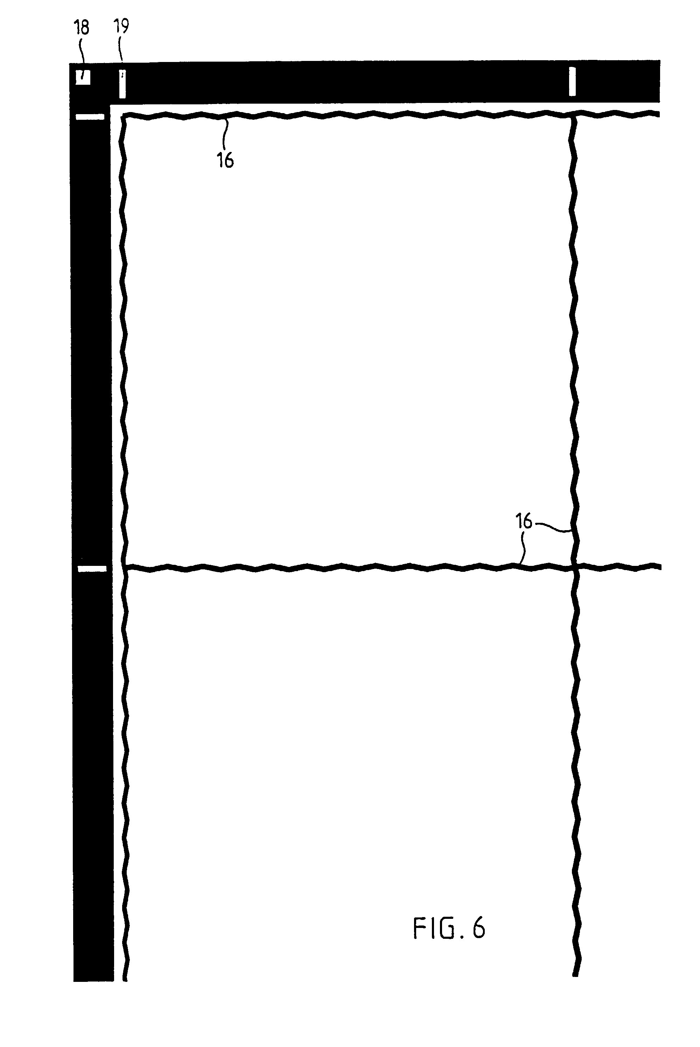

Fig. 6 illustrates an array in which the synchronization lines have no phase shift and therefore present the appearance of a snake line. Any non-integer phase-shift is also feasible because phase shift has no functional relevance in analyzing the data.

The greatest insight into the invention can be gained by considering three functionalities separately, using a graphic element as illustration for each, ignoring for the moment the essential connection between the functionality and the element.

### Synchronization Lines

The synchronization lines are essential components of the present invention. The hitherto known, if not widely employed, systems focus chiefly on the opto-mechanical synchronization of the reading apparatus itself.

The system of the present invention relies on unsynchronized low-cost image scanners. It does so by carrying its own synchronization data through the scan, to be processed by software after scanning. The synchronization lines 16 shown are one possible graphic configuration of such synchronization data. Each synchronization line consists of a black line bounded on each side by a white band which allows the line to be recognized. In practice, synchronization elements are placed appropriately and periodically throughout large area data patterns. Once the position of each of these reference elements has been determined by the decoding process, each dot of the entire pattern has its reference elements close enough for the expected absolute total system error margin within the local reference section under consideration to be smaller than the dot radius.

The figures show a network of lines dividing a large data area into smaller sections. The method of synchronization involves calculating the position parameters of each of the four lines 16 bordering a data section by means of a statistical regression and computing their four corner intersections. These intersections in the corners of the fields represent the location reference points. The relative x,y position of each data dot within those four corners is exactly defined by the pattern design. The absolute position of each dot is deducible by linear interpolation from its known relative position and the calculated corner coordinates. Linearity failures are kept below a critical threshold by dimensioning the data sections small enough.

The precision of locating the corner coordinates is important in terms of the achievable data densities. Like any slack in the system, errors in calculation of the corner coordinates must be taken up by correspondingly increased dot radius, and any increase in dot radius reduces data density.

The proposed method of locating synchronization references is a statistical one. It works best by avoiding both parallelism (hence the zig-zag) and common periodicity between synchronization elements and the scan grid. The latter is avoided by selecting a phase length for the zig-zag that is not a simple multiple of the scan resolution. In other words, the statistical nature of the locating method recommends that a maximum of randomness or a minimum of phase coincidence be achieved.

With scanner resolutions not significantly finer than the data dot screen, zig-zagging of synchronization line borders benefits data density per unit area. Straight-edge lines will also work, but less reliably or equally reliably only with larger data dots. The zig-zag is important as a system optimization element.

The frame 14 carries at least enough information to distinguish it from the frame of some other element which might appear in a publication, such as an advertisement, and to furnish an overall indication of scale and internal structure of the contained material. The shown frame markings are examples. More elaborate markings can also carry field-type information. Application-oriented flexibility suggests the optional inclusion of conventional type or bar codes side-by-side with dot data.

In summary, it can be said that both frame and synchronization elements are two incarnations of the same basic functionality with the frame specialized for pattern identification and the synchronization lines for furnishing positional information. The two functions are not mutually exclusive and so can be entrusted to one single graphic element if circumstances recommend.

Tuning now to the data-dot screen, the binary information entity, the bit, is graphically represented by one data dot. The dot is pictured black or white, depending on whether the bit is set or clear, "1" or "0" (or the other way around).

Various arrangements for placing the dots are possible. The dots being essentially circular, a triangular (honeycomb) arrangement of the dots is best from a data-density point of view. Orthogonal arrangements are, however, reasonably good and are employed when dot patterns are to be generated using office laser printers which are incapable of producing a hexagonal geometry on account of their own orthogonal print grid and their limited resolution at the intended small scales.

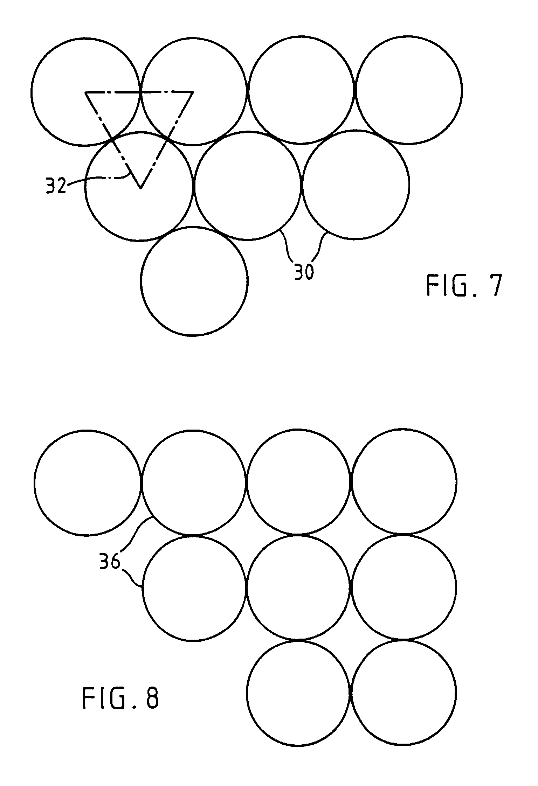

Fig. 7 illustrates a triangular arrangement of dot locations 30 which means that the centers of the dot locations are at the vertices of equilateral triangles such as triangle 32. As mentioned, there is no space between dot locations or rows of dot locations. Thus, in Figs. 2 - 6, the greatly enlarged dot representations appear as hexagons which, in a triangular arrangement, would fill all available space completely. However, as a practical matter, printing equipment will not produce hexagonal dots at the actual sizes contemplated. The dots would be approximately circular and would therefore be arranged as shown in Fig. 7.

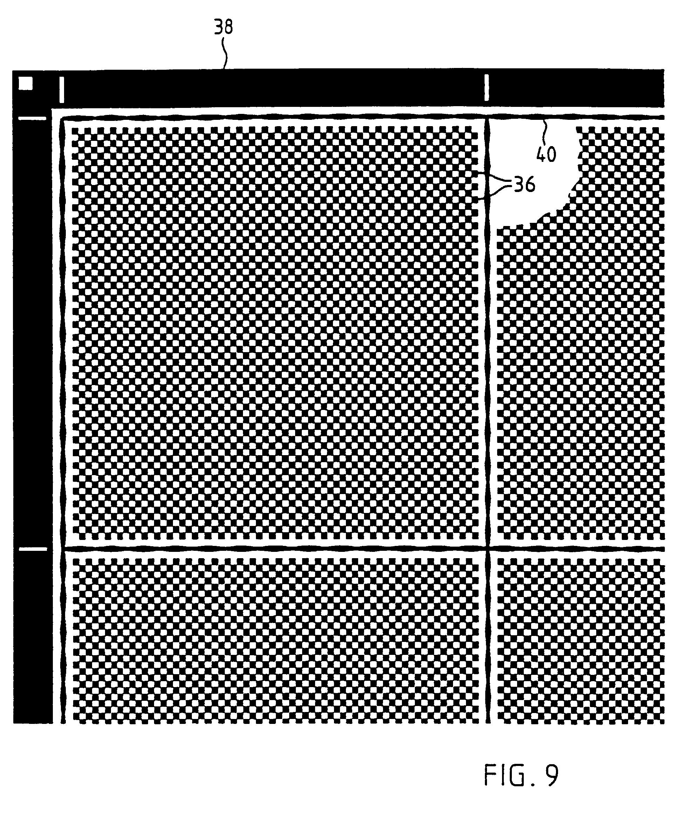

A rectangular or orthogonal arrangement of dot locations 36 is shown in Fig. 8 and, in connection with a frame 38 and synchronization lines 40, in Fig. 9 at a lesser degree of magnification. As mentioned above, the orthogonal arrangement is more suitable for printing with a lower resolution printer such as an office laser machine.

In the conversion of binary data to a graphic pattern of a specific form, an orthogonal network of lines is constructed so as to divide a rectangular area into a typically two-dimensional array of rectangles, preferably squares, the aspect ratio of the area having been selected by the operator in section units. The line width is on the order of one scanner resolution unit. Both of the borders follow a zig-zag course having an amplitude on the order of one scanner resolution unit and a period of several resolution units plus a fraction which prevents any resonance with the scan grid over the length of one data section. The zig-zag on each side of the line is in opposed phase to the other side. The line, consequently, alternatingly thickens and thins.

The described lattice of lines will serve as a geometric reference grid providing each square with its own local coordinate system. We refer to these lines constituting the grid as "synchronization lines".

The whole array of squares is then enclosed within a rectangular borderline. This frame contains marks that, by their placement, provide information on the placement of the synchronization lines, and, by their shape, information on the orientation of the entire field and on the type of data that is contained at the corresponding intersection (dot codes (triangular or orthogonal), regular type, bar codes, non-data padding, etc.). These marks also contribute significantly to the identification of the pattern as valid data in contrast to extraneous graphics.

Thus far, the graphic elements whose task it is to convey structural or organizational system information has been described. The data proper is then filled into the individual squares in the form of two-dimensional arrays of fine dots, arranged contiguously in contiguous rows, so that the entire data area is completely covered with a screen of dot data. There is no space between the rows of dots. Each dot represents one binary data unit, one bit, and is represented either black or white, depending on the value of the equivalent bit which it represents. The geometry of the entire grid is exactly defined in terms of system parameters. So, each dot has its known relative position with reference to the synchronization lines enclosing the field. The size (diameter) of the dots typically is on the order of two or three scanner resolution units.

The binary data, prior to its conversion, is preferably pre-processed in several ways: its volume is compressed by redundancy removal, it is de-serialized, system data is added, such as system parameters and data identification and, finally, error-correction redundancy is also added.

In the extraction of the original binary data from the graphic pattern, the printed pattern is converted to an image bit map by means of an image scanner and is stored. Unlike constructing a pattern, decoding it is a process with a definite sequentiality. The reason is that the goal is to look at all data dots in the order in which they occur and inspect their color, black or white. In order to do this, the location of each individual data dot must be determined. But since the data dots can only be found relative to a local coordinate system defined by the synchronization lines, each one of those lines has to be processed first through a linear regression calculation. That, again, can only happen after the approximate location of the lines has been determined by interpreting marks in the frame, which, again, presupposes that a frame has been found. In summary, a sequence of locating procedures must be executed, each step of which receives location information of a certain precision from the preceding step and passes improved location information on to the next one.

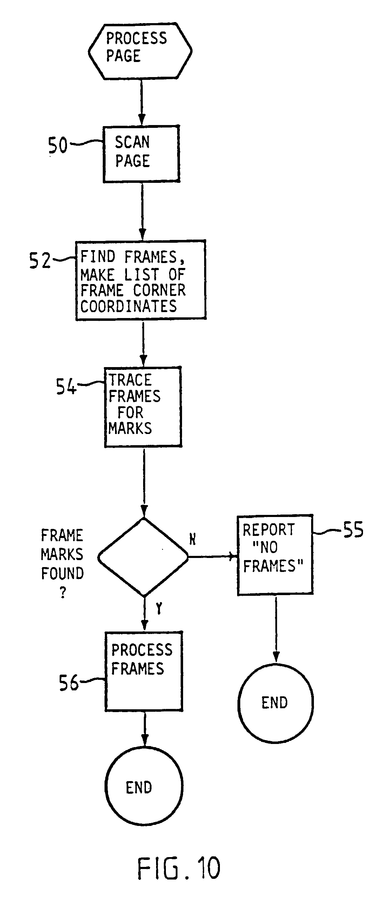

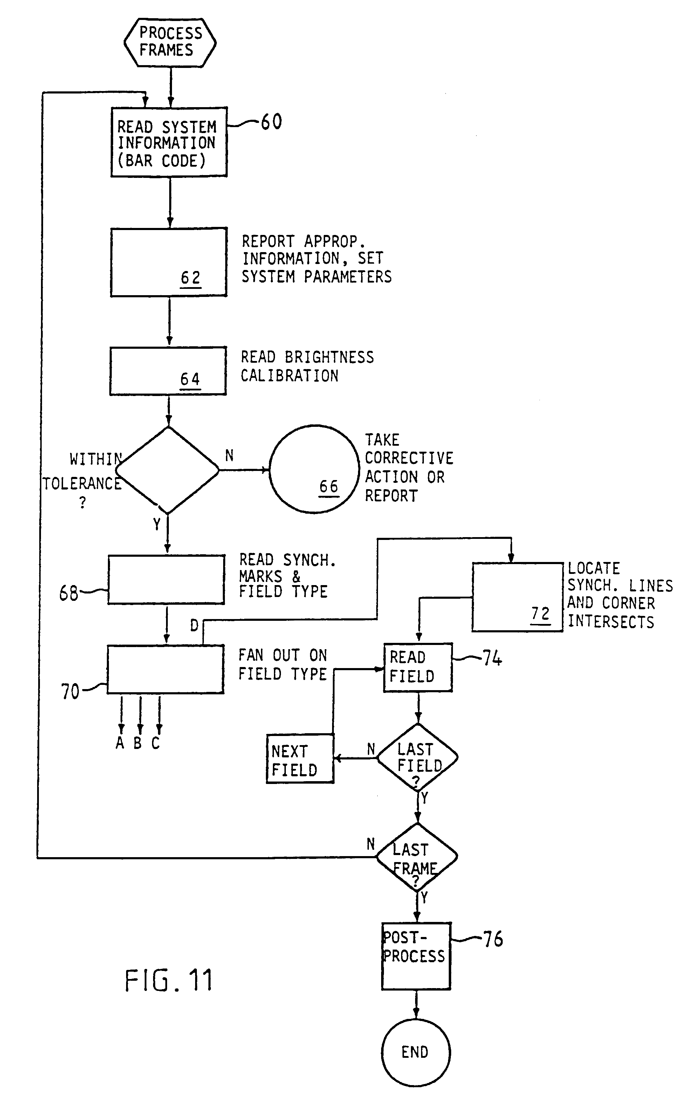

Following is a step-by-step account of the decoding process with reference to Figs. 10 and 11. The coordinate system is that of the bit map. Each point in this coordinate system represents one scanner reading. The points are spaced one scanner resolution unit apart from one another. The Y-coordinate identifies the sequential positions of the scan lines on which the points lie and the X-coordinate identifies the sequential position of the point in the scan line.

First, a page is scanned, 50, and a graphic bit-map generated and stored in computer memory. The result is an image file wherein each reading, i.e., each point, can be addressed through two coordinates in scan resolution units (X and Y, or scan column and scan row, respectively). All steps after this are performed on the bit map in memory.

To find a frame, 52, a sample of scan lines, equally spaced at an interval just close enough to guarantee catching the smallest possible data pattern, is examined, bit by bit. Each color transition encountered in this examination initiates an edge-tracking procedure following along the transition. Edge tracking is immediately abandoned the moment the tracked edge is found not to be rectilinear over an appropriate distance, except for ninety-degree turns in the expected direction. When edge tracking reveals four corners and returns to the starting position, a potential frame has been identified and its location determined by the coordinates of its corners which are stored.

The potential frame is traced for marks, 54. If none are found, the frame is rejected as an extraneous pattern, 55, and "no frame" is reported. The frame-finding procedure resumes until it reaches the end of the page. Tracing includes reading in the bit map of the captured image along a straight line from a given starting point to an end point. This amounts to following a path parallel with the located edge. Algorithmically, a straight line is traced by incrementing two coordinates in a number 'n' of constant steps, so as to traverse the path from the starting point coordinates to the end point coordinates in 'n' steps. 'Tracing the frame' consists in tracing along the longitudinal axis of each of the four border lines. Marks manifest themselves by alternating black and white stretches. The transition points between stretches of different color (e.g., white to black) yield positional information, their relative lengths yield field-type information and their order of occurrence (black - white versus white - black) yields pattern-orientation information.

When a frame is found, the bit map of the frame and its enclosed data is processed as follows with reference to Fig. 11 (56). It should be recognized that a frame can contain a plurality of data fields, as shown in the figures. Following is a description of the decoding of one individual data field enclosed in a rectangular frame of four synchronization lines. It is possible for a single frame to contain several synchronization lines defining several fields and it is also possible for the fields to be of different types, i.e., to contain data in different formats as well as data of different types, these options being at the discretion of the producer of the data. Decoding an entire pattern including an array of such data fields is a repetitive operation of decoding individual fields and as such requires no detailed explanations. However, it is desirable for the geometric system including the frame and the synchronization lines to contain machine-readable information telling the analytical software what kind of format etc. to expect.

Accordingly, such system information is included in the frame in the form, for example, of bar code. This system information is read, 60, in a tracing operation and the appropriate information is reported, 62. The system parameters can then be set either automatically or by an operator.

Brightness calibration 64 is then performed. The details of the brightness calibration will be discussed below. If the brightness calibration is not within tolerable limits, corrective action is taken or the fact is reported on screen, 66.

If the brightness is within tolerance, the synch marks 19 and field type data is read, 68, and a determination is made of the field type for purposes of selecting the type of evaluating software which will be used to analyze the data. For purposes of illustration, it will be assumed that there are four possible types A, B, C and D which are best handled by different routines. These type differences can be, for example, dots arranged on either a triangular or an orthogonal grid or data from other systems such as alpha-numeric text or bar codes. At this stage, the field type having been determined, the process is fanned to the appropriate type, 70.

The synchronization lines are then located with precision, 72. The frame marks 19 indicate the locations of the synchronization lines accurately enough to identify zones in which the synchronization lines must lie. These zones are presumed to encompass the synchronization line as well as the entire area between the medians of neutral zones of uniform color on opposite sides of the synchronization line itself. The neutral zones are those areas between the sunchronization lines and the data fields and are of opposite color from the lines. This guarantees that the line will lie inside the zone and no data will. In the direction of the line axis we delimit the zone to lie between intersections. In this way we define a synchronization line section referencing an individual data field next to it. The exact location of the line is then determined by inspecting all scanner readings in that zone. The coordinate readings belonging to the synchronization line (typically black) are fed into a linear regression function. By the time the entire zone is processed in this manner, the regression function yields the geometric position of the synchronization line axis in the coordinate system.

The corner intersections of the four synchronization lines surrounding the data field are located mathematically from the intersecting line coordinates. The result is four pairs of coordinates that, in bit map coordinates, are accurate to fractions of a resolution unit.

The next step involves reading the data dots. The field type being known from the corresponding frame marks, the exact geometry of the field structure is known. consequently, each data dot's position can be calculated by linearly interpolating its relative position within the four reference corners. Decoding the entire field consists in sequentially tracing all the dot rows that make up the field. The operation is a simple iteration process whose essence is the repeated addition of constant coordinate increments.

After reading a field, the program looks to see if there is another field to be read and, if so, looks for another frame until all fields and all frames have been read.

The reconstituted raw data is post-processed 76 in reverse order of the pre-processing: error correction with report of success or failure of extraction, report or recording of system data or both, re-serialization, and decompression. The post-processing can also be tailored to the nature of the system, in which case step 76 would constitute a fan-out to the particular kind of post-processing needed. Text, for example, would involve no data decompression.

Fig. 14 shows one suitable arrangement for including calibration and system information in a frame 79 of a data array. In addition to the orientation and synch line marks 18 and 19 as discussed in connection with Fig. 2, the frame 79 includes three frame components 80, 81 and 82 each having regions with additional information. Frame component 80 forms the outermost layer of the frame, frame component 82 forms the innermost and frame component 81 is sandwiched between the others.

As mentioned, reading binary data is more error-critical a process than capturing picture data. Brightness calibration is one possible source of error. In the context under consideration, brightness calibration deals with the scanner's response to readings that fall neither wholly into a black or into a white area but on a contour between black and white. On such a position the scanner will register a gray color, either a dark gray, if the reading is predominantly in the black, or a light gray if it is predominantly in the white. The scanner will interpret light gray as white, dark gray as black and will discriminate between light and dark according to its brightness calibration setting. Thus, the distinction between dark and light is a question of brightness calibration. The effect of an imbalanced brightness calibration is a shift of the perceived contour toward the black or the white side. Such a shift will cause the scanner to over- or underestimate the size of small elements, an effect that is highly critical to the successful interpretation of fine data screens.

Accordingly, black and white reference areas of equal size, preferably located in the frame, should generate an equal amount of white and black readings. For this purpose, the outermost frame component 80 has a sequence of four calibration strips, uniform white and black stripes which are read in step 64. Any imbalance between the respective number of white and black readings can be measured and the value used for correction. This method will correct a calibration imbalance with respect to the print and effectively compensates for dot size variations resulting from inevitable ink flow variations in the printing press.

Since the calibration pertains to the response transition on a contour, test patterns work best with little area and much contour, for instance long, thin lines.

Focus calibration can also be included if the scanner is capable of receiving a feedback signal and correcting focus in response to that signal.

Frame component 81 includes system identification information so that, in step 70 (Fig. 11) the appropriate choice can be made without the analyzing system having to deduce what system is involved. Preferably, component 81 identifies the dot array system used in each field and can also be used to contain other information.

As shown in Fig. 14 and as mentioned above, the fields can be of various types such as the dot screens 84 which are discussed above in detail; a text field which could identify the data in human-readable form; a combination of text and graphics, as suggested at 85; a null field 86; bar codes, etc. Whichever system is involved in each field is identified in component 82 and, in addition, component 82 carries the marks like marks 19 for locating the synch lines. Again, frame component 82 includes four strips making up the inner layer of the frame.

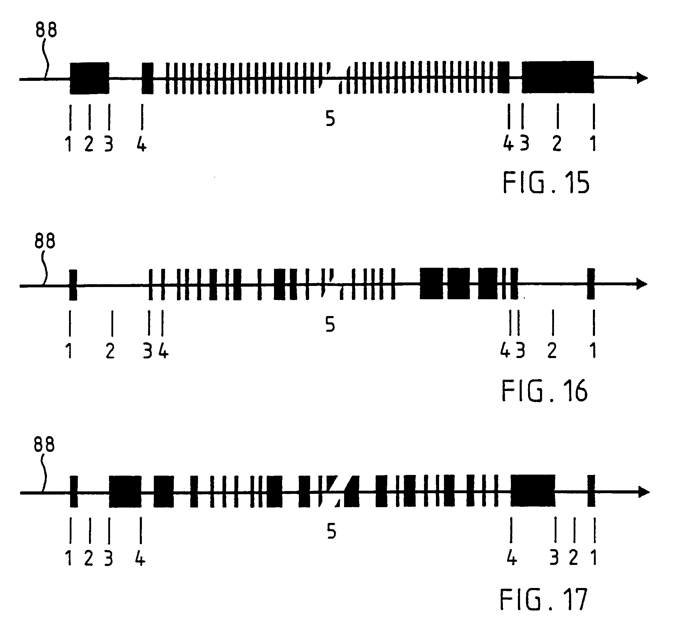

Individual sides of each of the frame components are shown in Figs. 15, 16 and 17 in foreshortened form. The leading and trailing ends of each of the frame components include white and black sections which form an orientation code as discussed in connection with Fig. 2. The frames are read in the tracing process mentioned above in which the component is read along the axis of the component, starting at either end, along the line 88. The color transitions (black/white) yield width measurements which give the orientation and system information.

Tracing a calibration strip, as shown in Fig. 15, involves the following process in which the numbers correspond to those on the figure.
1. Move up to the beginning of the frame from the outside at one end which locates the beginning of the strip.
2. Move to the approximate center of the first square; at this point the color of the initial square is known.
3. proceed to the next color transition, giving the width of the component strip.
4. proceed to the next color transition, giving the width of the frame perpendicular and the beginning of the calibration pattern.
   Repeat 1, 2, 3 and 4 at the other end; then
5. Proceed through the calibration pattern, giving feedback information for calibration.

Tracing the other frame component strips:
1. Move to the beginning of the frame from the outside at one end, giving the beginning location.
2. Proceed to the approximate center of the first swuare which gives color information.
3. Proceed to the next color transition which gives the width of the frame perpendicular.
4. Proceed to the next transition which is the beginning of the data.
   Repeat at the other end, if necessary; then
5. Proceed through the data.

These tracing processes will yield the following information:
a. Pattern orientation (with redundancy),
b. width of frame component strip (with redundancy),
c. width of frame line perpendicular (with redundancy), and
d. the data obtained from the strip.

While the invention has been discussed in terms of printing the data arrays on paper, and while that is regarded as being an especially useful format for the invention, it should be recognized that it is not the only format. Film and other media are also usable with the invention and the areas of light and dark can be reversed if that is more convenient in a particular medium.

While certain advantageous embodiments have been chosen to illustrate the invention, it will be understood by those skilled in the art that various changes and modifications can be made therein without departing from the scope of the invention as defined in the appended claims.

## Claims

1. A method for graphically representing binary data in a condensed, machine-readable form, comprising the steps of:
forming a pattern of information-carrying graphic elements defining a geometric reference system, said reference system including a substantially continuous frame (14), said frame (14) having a selected width and a plurality of synchronization lines (16) enclosed by the frame (14) defining boundaries of at least one data field (12),
placing a plurality of frame markings (18,19) within the width of the frame (14) identifying the pattern as a data-field reference system, said frame markings include marks (19) which are substantially aligned with the synchronization lines (16) for locating the synchronization lines (16) and substantially filling the at least one data field (12) with a plurality of binary data transmission elements, each characterized by the presence or absence of a machine-readable mark at each of a plurality of continuous binary data element locations, each binary data element location having a known geometric relationship to the reference system, so that coordinates of each of the plurality of individual binary data elements can be accurately determined.

2. A method according to claim 1, wherein the synchronization lines (16) define a plurality of fields (12) and wherein the method includes the step of selecting an arrangement for said fields (12) relative to each other and shaping the frame (14) to surround the selected arrangement of fields (12).

3. A method according to claim 2, wherein the synchronization lines (16) are orthogonal.

4. A method according to claim 2 and including forming the synchronization lines (16) with edges which repetitively and substantially linearly diverge and converge relative to each other.

5. A method according to claim 2 and including forming the synchronization lines (16) with stepped edges.

6. A method according to claim 2 and including incorporating in the frame markings (18,19) within the width of the frame (14) information describing the type of binary data carried by the elements and defining orientation thereof to indicate a beginning location of the reference system.

7. A method according to claim 6, wherein the binary data transmission elements are arranged in the field (12) in a selected geometric format, the method including incorporating in the frame markings (18,19) within the width of the frame (14) information describing the geometric format of the binary data transmission elements.

8. A method of graphically representing binary data in a condensed machine-readable form, and of reading the binary data comprising the method according to claim 1 and further comprising the steps of:
printing the binary data graphically on a medium in a condensed, high, density, machine-readable form,
transporting the medium,
optically scanning the medium and forming a bit-map of the pattern including the frame markings (18,19) and binary data elements,
evaluating the frame markings (18,19) to determine the orientation and location of the binary data elements, and
reading the binary data elements.

9. A method according to claim 8, wherein the step of evaluating includes tracing a frame portion of the bit-map image of the frame markings (18,19) to determine the orientation, tracing synchronization line portions of the bit-map image of the first elements to identify intersections of the synchronization lines (16), and then determining the locations of the binary data elements form the intersection locations.

10. A method according to claim 1 further comprising the step of:
printing on a selected medium the pattern of information-carrying graphic elements.

11. A method according to claim 10 wherein said selected medium is a sheet of paper and wherein said binary data elements and said reference system are printed concurrently.

12. Machine-readable graphic reference and data pattern produced according to claim 1 wherein a reference system includes a substantially continuous frame (14), said frame (14) having a selected width and a plurality of synchronization lines (16) enclosed by the frame (14) defining boundaries of at least one data field (12), a plurality of frame markings (18,19) within the width of the frame (14) identify the pattern as a data-field reference system, said frame markings include marks (19) which are substantially aligned with the synchronization lines (16) for locating the synchronization lines (16), and a plurality of binary data transmission elements are filled in at least one data field (12), each characterized by the presence or absence of a machine-readable mark at each of a plurality of continuous binary data element locations, each binary data element location having a known geometric relationship to the reference system, so that coordinates of each of the plurality of individual binary data elements can be accurately determined.

## Patentansprüche

1. Verfahren zur grafischen Darstellung von Binärdaten in kondensierter, maschinenlesbarer Form, welches die folgenden Schritte aufweist, dass ein Muster von informationstragenden grafischen Elementen gebildet wird, welches ein geometrisches Referenzsystem definiert, dieses Referenzsystem weist einen im wesentlichen kontinuierlichen Rahmen (14) auf, dieser Rahmen (14) hat eine bestimmte Weite und eine Mehrzahl von Synchronisationslinien (16), welche, vom Rahmen (14) umschlossen, Grenzen mindestens eines Datenfeldes (12) bilden, dass eine Mehrzahl von Rahmenmarkierungen (18, 19) innerhalb der Weite des Rahmens (14) plaziert werden, welche das Muster als Datenfeldreferenzsystem identifizieren, diese Rahmenmarkierungen (18, 19) beinhalten Markierungen (19), welche im wesentlichen zu den Synchronisationslinien (16) ausgerichtet sind, und zur Lagebestimmung der Synchronisationslinien (16) dienen, dass mindestens ein Datenfeld (12) mit einer Mehrzahl von binären Datenübertragungselementen im wesentlichen aufgefüllt wird, jedes der binären Datenübertragungselemente ist durch die An- oder Abwesenheit einer maschinenlesbaren Markierung an jeder der Mehrzahl von kontinuierlichen Binärdatenelementlagen gekennzeichnet, jede Binärdatenelementlage weist eine bekannte geometrische Beziehung gegenüber dem Referenzsystem auf, sodass die Koordinaten jeder der Mehrzahl individueller Binärdatenelemente genau bestimmt werden kann.

2. Verfahren gemäss Anspruch 1, wobei durch die Synchronisationslinien (16) eine Mehrzahl von Feldern (12) definiert wird und das Verfahren den Schritt umfasst, dass eine Anordnung von Feldern (12) ausgewählt und der Rahmen (14) so angepasst wird, dass er diese Anordnung von Feldern (12) umgibt.

3. Verfahren gemäss Anspruch 2, wobei die Synchronisationslinien (16) orthogonal angeordnet werden.

4. Verfahren gemäss Anspruch 2, welches die Bildung von Synchronisationslinien (16) mit wiederholt und im wesentlichen relativ zueinander linear auseinander-und zusammenlaufen Kanten umfasst.

5. Verfahren gemäss Anspruch 2, welches die Bildung von Synchronisationslinien mit treppenförmigen Kanten umfasst.

6. Verfahren gemäss Anspruch 2, welche das Einfügen von Informationen in die Rahmenmarkierungen (18, 19) innerhalb der Weite des Rahmens (14) umfasst, diese Informationen geben über den Typ der binären Daten, die durch die Elemente gebildet werden, Auskunft und über die Orientierung davon, um einen Anfang des Referenzsystems zu lokalisieren.

7. Verfahren gemäss Anspruch 6, wobei die binären Datenübertragungselemente in einem Feld (12) von bestimmtem geometrischen Format angeordnet werden und das Verfahren das Einfügen von Informationen in die Rahmenmarkierungen (18, 19) innerhalb des Rahmens (14) umfasst, welche Informationen das geometrische Format der binären Datenübertragungselemente angeben.

8. Verfahren zur grafischen Darstellung von Binärdaten in kondensierter, maschinenlesbarer Form und zum Lesen der Binärdaten, welches dasVerfahren gemäss Anspruch 1 umfasst und welches zusätzlich die folgenden Schritte aufweist:
grafisches Drucken der Binärdaten auf ein Medium in kondensierter, hochdichter und maschinenlesbarer Form auf ein Medium, Transportieren vom Medium,
optisches Scannen vom Medium und Bildung eines Bitmaps vom Muster mit den Rahmenmarkierungen (18, 19) und Binärdataelementen, Auswertung der Rahmenmarkierungen (18, 19) zur Bestimmung von Orientierung und Lage der Binärdatenelemente und Lesen der Binärdatenelemente.

9. Verfahren gemäss Anspruch 8, wobei der Auswertungsschritt umfasst, dass ein Rahmenteil vom Bitmapbild der Rahmenmarkierungen (18, 19) gezeichnet wird, um die Orientierung zu bestimmen, dass Synchronisationslinienteile gezeichnet werden, um Schnittpunkte der Synchronisationslinien (16) zu identifizieren und dass die Lage der Binärdatenelemente aus der Lage der Schnittpunkte bestimmt wird.

10. Verfahren gemäss Anspruch 1, welches zusätzlich den Schritt umfasst, dass das informationstragende grafische Muster auf einem ausgewählten Medium gedruckt wird.

11. Verfahren gemäss Anspruch 10, wobei als ausgewähltes Medium ein Blatt Papier verwendet wird und die Binärdatenelemente und das Referenzsystem gleichzeitig gedruckt werden.

12. Maschinenlesbares grafisches Referenz- und Datenmuster, hergestellt gemäss Anspruch 1, wobei ein Referenzsystem einen im wesentlichen kontinuierlichen Rahmen (14) aufweist, dieser Rahmen (14) eine bestimmte Weite und eine Mehrzahl von Synchronisationslinien (16) hat, welche, vom Rahmen (14) umschlossen sind und Grenzen mindestens eines Datenfeldes (12) bilden, eine Mehrzahl von Rahmenmarkierungen (18, 19) innerhalb der Weite des Rahmens (14) identifizieren das Muster als Datenfeldreferenzsystem, diese Rahmenmarkierungen (18, 19) beinhalten Markierungen (19), welche im wesentlichen zu den Synchronisationslinien (16) ausgerichtet sind, und zur Lagebestimmung der Synchronisationslinien (16) dienen, und mindestens ein Datenfeld (12) ist mit einer Mehrzahl von binären Datenübertragungselementen aufgefüllt, jedes der binären Datenübertragungselemente ist durch die An- oder Abwesenheit einer maschinenlesbaren Markierung an jeder der Mehrzahl von kontinuierlichen Binärdatenelementlagen gekennzeichnet, jede Binärdatenelementlage weist eine bekannte geometrische Beziehung gegenüber dem Referenzsystem auf, sodass die Koordinaten jeder der Mehrzahl individueller Binärdatenelemente genau bestimmt werden kann.

## Revendications

1. Procédé de représentation graphique de données binaires sous une forme condensée, exploitable par une machine, comprenant les étapes de :
formation d'une combinaison d'éléments graphiques supportant des informations définissant un système de référence géométrique, ledit système de référence comprenant un cadre sensiblement continu (14), ledit cadre (14) ayant une largeur sélectionnée et une pluralité de lignes de synchronisation (16) entourées par le cadre (14) définissant des limites d'au moins un champ de données (12),
placement d'une pluralité de marquages de cadre (18, 19) dans la largeur du cadre (14) pour identifier la combinaison comme un système de référence de champs de données, lesdits marquages de cadre comprenant des repères (19) qui sont sensiblement alignés avec les lignes de synchronisation (16) pour localiser les lignes de synchronisation (16) et remplissant sensiblement le au moins un champ de données (12) avec une pluralité d'éléments de transmission de données binaires, chacun caractérisé par la présence ou l'absence d'un repère exploitable par une machine à chacune d'une pluralité d'adresses d'éléments de données binaires continus, chaque adresse d'éléments de données binaires ayant une relation géométrique connue avec le système de référence, de manière que des coordonnées de chacun de la pluralité d'éléments de données binaires individuels peuvent être déterminées avec précision.

2. Procédé selon la revendication 1, dans lequel les lignes de synchronisation (16) définissent une pluralité de champs (12) et dans lequel le procédé comprend l'étape de sélection d'un agencement pour lesdits champs (12) l'un par rapport à l'autre et de formation du cadre (14) pour entourer les agencements de champs (12) sélectionnés.

3. Procédé selon la revendication 2, dans lequel les lignes de synchronisation (16) sont orthogonales.

4. Procédé selon la revendication 2 et comprenant la formation des lignes de synchronisation (16) avec des bords qui divergent et convergent les uns par rapport aux autres de manière répétitive et sensiblement linéaire.

5. Procédé selon la revendication 2 et comprenant la formation des lignes de synchronisation (16) avec des bords échelonnés.

6. Procédé selon la revendication 2 et comprenant l'incorporation dans les marquages du cadre (18, 19) dans la largeur du cadre (14) des informations décrivant le type de données binaires supportées par les éléments et définissant une orientation de ceux-ci pour indiquer une adresse de début du système de référence.

7. Procédé selon la revendication 6, dans lequel les éléments de transmission de données binaires sont agencés dans le champ (12) dans un format géométrique sélectionné, le procédé comprenant l'incorporation dans les marquages du cadre (18, 19) dans la largeur du cadre (14) des informations décrivant le format géométrique des éléments de transmission de données binaires.

8. Procédé de représentation graphique de données binaires sous une forme condensée, exploitable par une machine, et de lecture des données binaires comprenant le procédé selon la revendication 1 et comprenant, de plus, les étapes de :
impression des données binaires graphiquement sur un support sous une forme condensée, à haute densité, exploitable par une machine,
transport du support,
analyse optique du support et formation d'une grille de points de la combinaison comprenant les marquages du cadre (18, 19) et des éléments de données binaires,
évaluation des marquages du cadre (18, 19) pour déterminer l'orientation et l'adresse des éléments de données binaires, et
lecture des éléments de données binaires.

9. Procédé selon la revendication 8, dans lequel l'étape d'évaluation comprend le tracé d'une partie du cadre de l'image matricielle des marquages du cadre (18, 19) pour déterminer l'orientation, le tracé de parties de lignes de synchronisation de l'image matricielle des premiers éléments pour identifier des intersections des lignes de synchronisation (16), puis la détermination des adresses des éléments de données binaires à partir des adresses d'intersections.

10. Procédé selon la revendication 1 comprenant, de plus, l'étape de :
impression sur un support sélectionné de la combinaison d'éléments graphiques supportant des informations.

11. Procédé selon la revendication 10, dans lequel ledit support sélectionné est une feuille de papier et dans lequel lesdits éléments de données binaires et ledit système de référence sont imprimés parallèlement.

12. Combinaison de données et référence graphique exploitables par une machine, selon la revendication 1, dans lesquelles un système de référence comprend un cadre sensiblement continu (14), ledit cadre (14) ayant une largeur sélectionnée et une pluralité de lignes de synchronisation (16) entourées par le cadre (14) définissant des limites d'au moins un champ de données (12), une pluralité de marquages de cadre (18, 19) dans la largeur du cadre (14) pour identifier la combinaison comme un système de référence de champs de données, lesdits marquages de cadre comprenant des repères (19) qui sont sensiblement alignés avec les lignes de synchronisation (16) pour localiser les lignes de synchronisation (16), et une pluralité d'éléments de transmission de données binaires sont introduits dans au moins un champ de données (12), chacun caractérisé par la présence ou l'absence d'un repère exploitable par une machine à chacune d'une pluralité d'adresses d'éléments de données binaires continus, chaque adresse d'éléments de données binaires ayant une relation géométrique connue avec le système de référence, de manière que des coordonnées de chacun de la pluralité d'éléments de données binaires individuels peuvent être déterminées avec précision.
